# EUROPÄISCHE PATENTANMELDUNG

(11) **EP 1 632 540 A1**
(43) Veröffentlichungstag der Anmeldung: **08.03.2006**
(21) Anmeldenummer: 04104256.5
(22) Anmeldetag: 03.09.2004
(51) Int. Cl.: C09D 183/04, C08J 7/04

(54) **Zum Verkleben geeignete thermisch gehärtete Silikonbeschichtung**

(71) Anmelder: Sika Technology AG, 6340 Baar (CH)
(72) Erfinder: Huck, Wolf-Rüdiger, 8044, Zürich (CH)
(74) Vertreter: Isler, Jörg

(57) **Zusammenfassung**

Die vorliegende Erfindung beschreibt thermisch gehärtete Silikonbeschichtungen auf einem thermoplastischen Kunststoff, die sich dadurch auszeichnen, dass sie ohne Verwendung eines Klebstoffprimers verklebt werden kann. Derartige thermisch gehärteten Silikonbeschichtungen werden hergestellt durch ein Verfahren, welches die folgenden Schritte umfasst:
- Aufbringen einer Silikonzusammensetzung auf die Oberfläche eines thermoplastischen Kunststoffes oder auf die Oberfläche eines mit einem Kunststoffprimer behandelten thermoplastischen Kunststoffes
- zumindest ein Teil-Ablüften der Silikonzusammensetzung unter Bildung eines Silikonfilms
- Auftragen einer Haftvermittlerzusammensetzung auf den Silikonfilm
- Einbrennen bei einer Temperatur zwischen 80°C und 200°C.

## Beschreibung

### Technisches Gebiet

Die Erfindung betrifft das Gebiet der thermisch gehärteten Silikonbeschichtungen auf thermoplastischen Kunststoffen sowie die Verfahren zu deren Herstellung und Verkleben.

### Stand der Technik

Thermoplastische Kunststoffe werden seit längerem verwendet. Deren Einsatz ist jedoch mit einigen Nachteilen verbunden. Infolge ihrer Weichheit sind sie sehr anfällig auf Kratzer. Diese ist insbesondere bei sichtbaren und/oder exponierten Teilen aus thermoplastischen Kunststoffen sehr nachteilig. Viele dieser thermoplastischen Kunststoffe sind durchsichtig und werden deshalb vielfach als Ersatz von Glas als Scheiben oder Abdeckungen verwendet. Bei diesen Anwendungen sind Kratzer ebenfalls sehr nachteilig, da das Licht durch die Kratzer abgelenkt werden und dadurch unklar bis trüb werden können.

Um diese Nachteile der thermoplastischen Kunststoffe zu beheben wurden sie seit längerem mit kratzfesten Silikonzusammensetzungen beschichtet. Solche Silikonzusammensetzungen werden auf die thermoplastischen Kunststoffe aufgebracht und eingebrannt. Diese thermische gehärteten Silikonbeschichtungen sind dem Fachmann auch unter dem englischen Term "Silicone Hard Coats" bekannt. Beispielsweise offenbaren solche Beschichtungen US 5,041,313, US 4,624,870 und EP 0 570 165 A2 oder G. Medford et al. in *"The Next Generation in Weatherable Hardcoats for Polycarbonate",* International Coatings for Plastics Symposium, 4.-6. Juni 2001, Troy , MI. Vielfach sind Formteile aus solchen mit thermisch gehärteten Silikonbeschichtungen behandelten thermoplastischen Kunststoffen jedoch mit anderen Formteilen zu verbinden. Infolge der bekannten Vorteile der Klebtechnologie ist es erwünscht diese Teile zu verkleben. Es hat sich jedoch gezeigt, dass solche beschichteten Teile sehr schwierig mit üblichen Klebstoffen, insbesondere mit einkomponentigen Polyurethanklebstoffen, zu verkleben sind.

EP 1 382 625 A1 löst dieses Problem durch den Einsatz eines speziellen Isocyanat-haltigen Primers mit guter Haftung auf Kunststoffen wie Poly(methylmethacrylat) oder Polycarbonat welche Polydimethylsiloxanbasierende Beschichtungen aufweisen (PDMS-PMMA oder PDMS-PC). Nachteilig hierzu ist jedoch, dass in der Fertigungslinie, wo solche Formteile eingesetzt werden, ein zusätzlicher Schritt, nämlich das Auftragen des Primers, nötig wird. Jedoch noch nachteiliger ist, dass durch das notwendige Ablüften, d.h. Zeit zwischen Auftragen des Primers und Auftragen des Klebstoffes, bedingt, eine Wartezeit entsteht, was für eine kontinuierliche Fertigung beispielsweise ein Zwischenlager bedingt. Weiterhin führen die üblicherweise in Primern vorhanden Lösungsmittel vielfach zu Spannungsrisskorrosion (Stress cracking).

### Darstellung der Erfindung

Aufgabe der vorliegenden Erfindung ist es daher, eine thermisch gehärtete Silikonbeschichtung auf einem thermoplastischen Kunststoff zur Verfügung zu stellen, welche primerlos mit einem Klebstoff zu verkleben ist.

Unter "primerlos zu verkleben" ist hier und im Folgenden die Eigenschaft der Verklebbarkeit ohne die Verwendung eines Klebstoffprimers zu verstehen.

Überraschenderweise wurde nun gefunden, dass dies durch ein Verfahren gemäss Anspruch 1 eine solche Beschichtung erreicht werden kann.

### Wege zur Ausführung der Erfindung

Die vorliegende Erfindung betrifft ein Verfahren zur Herstellung einer thermisch gehärteten Silikonbeschichtung auf einem thermoplastischen Kunststoff. Dieses Verfahren umfasst die Schritte
- Aufbringen einer Silikonzusammensetzung auf die Oberfläche eines thermoplastischen Kunststoffes oder auf die Oberfläche eines mit einem Kunststoffprimer behandelten thermoplastischen Kunststoffes
- zumindest ein Teil-Ablüften der Silikonzusammensetzung unter Bildung eines Silikonfilms
- Auftragen einer Haftvermittlerzusammensetzung auf den Silikonfilm
- Einbrennen bei einer Temperatur zwischen 80 und 200°C.

Die Silikonzusammensetzung umfasst typischerweise eine Dispersion einer kolloidalen Kieselsäure in einem Gemisch von Wasser und einem organischen Lösungsmittel und mindestens einem Trialkoxysilan RSi(OR')₃ oder dessen Silanol RSi(OR')₃₋ₙ(OH)ₙ oder Teilkondensate davon. Hierbei stellt R einen Alkyl-Substituenten mit 1-3 Kohlenstoffatomen oder einen Arylsubstituenten mit 6 bis 13 Kohlenstoffatomen dar, R' stellt einen Alkylsubstituenten mit 1-3 Kohlenstoffatomen dar und n stellt 1, 2 oder 3 dar. Bevorzugt ist R eine Methylgruppe. Ebenfalls bevorzugt ist R' eine Methylgruppe. Detaillierte Herstellungsmethoden der Silikonzusammensetzungen sowie der daraus hergestellten thermisch gehärteten Silikonbeschichtungen sind beispielsweise in den Patentschriften US 4,373,061, US 4,624,870, US 5,869,185 und US 5,041,313 beschrieben und werden somit als durch Referenz eingebundener Bestandteil der vorliegenden Erfindung betrachtet. Der Festkörperanteil der Silikonzusammensetzung beträgt typischerweise von 10 bis 30 Gew.-%, insbesondere von 15 bis 25 Gew.-%. Weiterhin ist der pH der Silikonzusammensetzung vorzugsweise zwischen 6 und 8.5, insbesondere zwischen 6.5 - 8. Ein bevorzugter Bestandteil der Silikonzusammensetzung ist ein alkoxysilylierter UV-Absorber, insbesondere solche wie sie in den in diesem Abschnitt genannten Patente erwähnt sind. Geeignete Silikonzusammensetzungen sind auf dem Markt kommerziell als Beschichtungsmittel für die Herstellung von thermisch gehärteten Silikonbeschichtungen (Hard Coats) beispielsweise von PPG Industries Ohio als Resilient oder von GE Silicones als PHC587, AS4000 oder AS4700 oder von SDC Technologies Inc. als CrystalCoat® oder Supercoat sowie ähnliche Systeme, wie sie von Fujikura Kasei vertrieben werden, erhältlich.

Der thermoplastische Kunststoff, auf den die Silikonzusammensetzung aufgebracht wird, ist grundsätzlich jeder bekannte thermoplastische Kunststoff. Besonders geeignet sind solche thermoplastischen Kunststoffe, die während dem Einbrennen ihre Form nicht oder nicht wesentlich verändern. Somit sollten die thermoplastischen Kunststoffe eine Glasübergangstemperatur von vorzugsweise über 100°C, insbesondere von über 120°C, aufweisen.

Vorzugsweise ist der thermoplastische Kunststoff transparent.

Besonders geeignete thermoplastische Kunststoffe sind einerseits Homo- oder Copolymere von Monomeren ausgewählt aus der Gruppe umfassend Methacrylsäure, Acrylsäure, Methacrylsäureester, Acrylsäureester, Styrol sowie deren beliebige Mischungen. Bevorzugt unter diesen Homo- oder Copolymeren ist Poly(methylmethacrylat).

Andererseits besonders geeignet sind Polycarbonate, insbesondere auf Bisphenol-A-basierend, sowie amorphe Polyester, wie PETG oder PET.

Bevorzugt werden aromatische thermoplastische Kunststoffe, insbesondere aromatische Polycarbonate wie solche, die unter dem Namen Lexan® polycarbonate von General Electric Company oder unter dem Namen Makrolon® von Bayer.

Je nach Anwendung können auch andere thermoplastische Kunststoffe oder deren Blends verwendet werden, wie beispielsweise Polyphenylenether, Polyetherimide, Polyester, Polyamide oder Polysulfone.

Die Haftvermittlerzusammensetzung umfasst vorzugsweise mindestens eine Organo-Siliziumverbindung und/oder mindestens eine Organo-Titanverbindung. Die Organo-Siliziumverbindung weist hierbei mindestens eine an ein Siliziumatom gebundene Alkoxygruppe sowie mindestens einen über eine Kohlenstoff-Silizium-Bindung an ein Siliziumatom gebundenen organischen Substituenten auf. Die Organo-Titanverbindung weist hierbei mindestens einen über eine Sauerstoff-Titan-Bindung an das Titanatom gebundenen Substituenten aufweist, auf.

Als Organo-Siliziumverbindungen sind besonders geeignet Organo-Siliziumverbindungen der Formeln Formel (I) oder (II) oder (III)

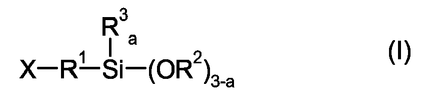

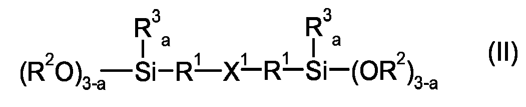

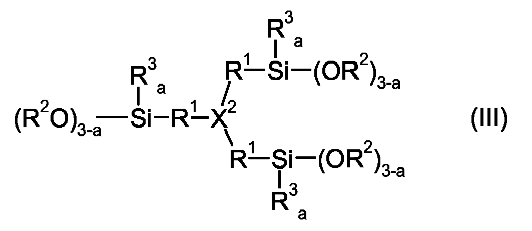

R¹ steht hierbei für eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen.

R² steht hierbei für eine Alkylgruppe mit 1 bis 5 C-Atomen, insbesondere für Methyl oder Ethyl.

R³ steht hierbei für eine Alkylgruppe mit 1 bis 8 C-Atomen, insbesondere Methyl.

X steht hierbei für ein H, oder eine funktionelle Gruppe, welche ausgewählt ist aus der Gruppe umfassend Oxiran, OH, (Meth)acryloxy, Amin, SH, Acylthio und Vinyl, bevorzugt Amin, steht. Der Vollständigkeit halber wird erwähnt, dass unter Acylthio in diesem Dokument der Substituent 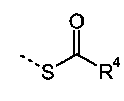 verstanden wird, wobei R⁴ für Alkyl, insbesondere mit 1 bis 20 Kohlenstoffatomen, steht und die gestrichelte Linie die Bindung zum Substituent R¹ darstellt.

X¹ steht hierbei für eine funktionelle Gruppe, welche ausgewählt ist aus der Gruppe umfassend NH, S, S₂ und S₄.

X² steht hierbei für eine funktionelle Gruppe, welche ausgewählt ist aus der Gruppe umfassend N und Isocyanurat.

a steht hierbei für einen der Werte 0, 1 oder 2, bevorzugt 0.

Der Substituent R¹ bedeutet insbesondere eine Methylen-, Propylen-, Methylpropylen-, Butylen- oder Dimethylbutylengruppe. Als besonders bevorzugt wird. Als Substituent R¹ eine Propylengruppe.

Amino-, Mercapto- oder Oxiran-Gruppen aufweisenden Organo-Siliziumverbindungen werden auch als "Aminosilane", "Mercaptosilane" oder "Epoxysilane" bezeichnet.

Als Organo-Siliziumverbindungen der Formel (I) sind beispielsweise geeignet die Organo-Siliziumverbindungen ausgewählt aus der Gruppe umfassend Methyltrimethoxysilan, Octyltrimethoxysilan, Dodecyltrimethoxysilan, Hexadecyltrimethoxysilan, Methyl-octyldimethoxysilan; 3-Glycidyloxypropyltrimethoxysilan, 3-Glycidyloxypropyltriethoxysilan; 3-Methacryloxypropyltrialkoxysilane, 3-Methacryloxypropyltriethoxysilan, 3-Methacryloxypropyltrimethoxysilan;
3-Aminopropyltrimethoxysilan, 3-Aminopropyltriethoxysilan, 3-Aminopropyl-dimethoxymethylsilan, 3-Amino-2-methylpropyl-trimethoxysilan, N-(2-Aminoethyl)-3-aminopropyl-trimethoxysilan, N-(2-Aminoethyl)-3-aminopropyl-tri-ethoxysilan, N-(2-Aminoethyl)-3-aminopropyl-dimethoxymethylsilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, 7-Amino-4-oxaheptyl-dimethoxymethylsilan, N-(Methyl)-3-aminopropyltrimethoxysilan, N-(n-butyl)-3-aminopropyltrimethoxysilan;
3-Mercaptopropyltriethoxysilan, 3-Mercaptopropyltrimethoxysilan, 3-Mercaptopropyl-methyldimethoxysilan;
3-Acylthiopropyltrimethoxysilan;
Vinyltrimethoxysilan und Vinyltriethoxysilan.

Als Organo-Siliziumverbindungen der Formel (II) sind geeignet beispielsweise die Organo-Siliziumverbindungen ausgewählt aus der Gruppe umfassend Bis-[3-(trimethoxysilyl)-propyl]-amin, Bis-[3-(triethoxysilyl)-propyl]-amin, 4,4,15,15-Tetraethoxy-3,16-dioxa-8,9,10,11 -tetrathia-4-15-dlsllaoctadecan (Bis(triethoxy-silylpropyl)polysulfid oder Bis(triethoxysilylpropyl)tetrasulfan), Bis(triethoxysilyl-propyl)disulfid.

Als Organo-Siliziumverbindungen der Formel (III) sind geeignet beispielsweise die Organo-Siliziumverbindungen ausgewählt aus der Gruppe umfassend Tris-[3-(trimethoxysilyl)-propyl]-amin, Tris-[3-(triethoxysilyl)-propyl]-amin, 1,3,5-tris-[3-(trimethoxysilyl)propyl]-1,3,5-triazine-2,4,6(1 H,3H,5H)-trion-harnstoff (=Tris-(3-(trimethoxysilyl)propyl)isocyanurat) und 1,3,5-tris[3-(triethoxysilyl)propyl]-1,3,5-triazine-2,4,6(1 H,3H,5H)-trion-harnstoff (=Tris(3-(triethoxysilyl)propyl)isocyanurat).

Bevorzugt als Organo-Siliziumverbindungen sind Aminosilane, insbesondere Aminosilane mit X = NH₂ oder NH₂-CH₂-CH₂-NH, X¹ = NH und X² = N. Besonders bevorzugt sind 3-Aminopropyltrimethoxysilan, N-(2-Aminoethyl)-3-aminopropyl-trimethoxysilan, Bis[3-(trimethoxysilyl)-propyl]-amin, 3-Aminopropyltriethoxysilan, N-(2-Aminoethyl)-3-aminopropyl-triethoxysilan und Bis[3-(triethoxysilyl)-propyl]-amin sowie deren Mischungen untereinander. Es hat sich gezeigt, dass insbesondere mit Aminosilanen, besonders bei den in diesem Abschnitt erwähnten Aminosilanen, die Mikrorissbildung der thermisch gehärteten Silikonbeschichtung reduziert wird.

Als über eine Sauerstoff-Titan-Bindung an das Titanatom gebundenen Substituenten sind besonders geeignete Substituenten sind ausgewählt aus der Gruppe umfassend Alkoxygruppe, Sulfonatgruppe, Carboxylatgruppe, Dialkylphosphatgruppe, Dialkylpyrophosphatgruppe und Acetylacetonatgruppe.

Besonders geeignet sind Verbindungen, bei denen alle an das Titan gebundene Substituenten aus der Gruppe umfassend Alkoxygruppe, Sulfonatgruppe, Carboxylatgruppe, Dialkylphosphatgruppe, Dialkylpyrophosphatgruppe und Acetylacetonatgruppe ausgewählt sind, wobei alle Substituenten identisch oder verschieden von einander sein können.

Als Alkoxygruppen haben sich insbesondere sogenannte Neoalkoxy-Substituenten, insbesondere der folgenden Formel (IV) besonders geeignet erwiesen

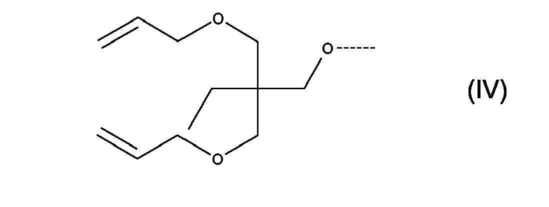

Als Sulfonsäuren haben sich insbesondere aromatische Sulfonsäuren, deren Aromaten mit einer Alkylgruppe substituiert sind, besonders geeignet erwiesen. Als bevorzugte Sulfonsäuren gelten Reste der folgenden Formel (V)

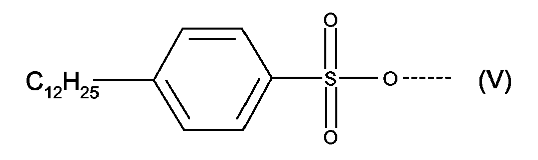

Als Carboxylatgruppen haben sich insbesondere Carboxylate von Fettsäuren besonders geeignet erwiesen. Als bevorzugte Carboxylate gilt Decanoat.

In allen den obigen Formel zeigt die gestrichelte Bindung hierbei die Sauerstoff-Titan-Bindung an.

Organo-Titanverbindungen sind kommerziell erhältlich, beispielsweise bei der Firma Kenrich Petrochemicals oder DuPont. Beispiele für geeignete Organo-Titanverbindungenverbindungen sind beispielsweise Ken-React® KR TTS, KR 7, KR 9S, KR 12, KR 26S, KR 33DS, KR 38S, KR 39DS, KR44, KR 134S, KR 138S, KR 158FS, KR212, KR 238S, KR 262ES, KR 138D, KR 158D, KR238T, KR 238M, KR238A, KR238J, KR262A, LICA 38J, KR 55, LICA 01, LICA 09, LICA 12, LICA 38, LICA 44, LICA 97, LICA 99, KR OPPR, KR OPP2 von Kenrich Petrochemicals oder Tyzor ® ET, TPT, NPT, BTM, AA, AA-75, AA-95, AA-105, TE, ETAM von DuPont. Bevorzugt gelten Ken-React® KR 7, KR 9S, KR 12, KR 26S, KR 38S, KR44, LICA 09, LICA 44, NZ 44, sowie Tyzor® ET, TPT, NPT, BTM, AA, AA-75, AA-95, AA-105, TE, ETAM von DuPont.

Als besonders bevorzugt sind Organo-Titanverbindungen mit über eine Sauerstoff-Titan-Bindung an das Titanatom gebundenen Substituenten der Formeln (IV) und/oder (V).

Bevorzugt umfasst die Haftvermittlerzusammensetzung mindestens eine Organo-Siliziumverbindung und mindestens eine Organo-Titanverbindung.

Die Haftvermittlerzusammensetzung kann weiterhin mindestens ein Lösungsmittel umfassen. Als Lösungsmittel sind besonders solche bevorzugt, die weder mit dem thermoplastischen Kunststoff noch mit dem allenfalls vorhandenen Kunststoffprimer zu Spannungsrissbildung führen. Als Lösungsmittel eignen sich insbesondere leicht flüchtige Lösungsmittel, das heisst solche mit einem Siedepunkt bei 760 Torr von zwischen 40°C und 140°C, insbesondere von zwischen 50°C und 120°C, bevorzugt von zwischen 65 und 99°C. Weiterhin hat es sich gezeigt, dass insbesondere Mischungen verschiedener Lösungsmittel vorteilhaft sind. Als besonders geeignet hat sich gezeigt, wenn Mischungen mindestens eines Kohlenwasserstoffes und mindestens eines polaren Lösungsmittel, welches mindestens ein Heteroatom in seiner Strukturformel aufweist, verwendet werden. Der Kohlenwasserstoff kann gesättigt oder olefinisch oder aromatisch ungesättigt sein. Bevorzugt ist der Kohlewasserstoff gesättigt. Als Heteroatom im polaren Lösungsmittel sind insbesondere O, N und S als geeignet zu betrachten. Bevorzugt ist das mindestens eine Heteroatom ein Sauerstoffatom, was besonders bevorzugt in Form von Hydroxyl-, Carbonyl-, Ether-, Carbonsäure- oder Carbonsäurederivat-Gruppen, wie beispielsweise Ester-, Amid- oder Carboxylat-Gruppe, in der Strukturformel des polaren Lösungsmittel vorliegt. Bevorzugte polare Lösungsmittel sind Wasser, Alkohole und Ketone. Meist bevorzugte polare Lösungsmittel sind Alkohole, insbesondere gesättigte, verzweigte oder lineare oder cyclische Alkohole mit 1 bis 8 Kohlenstoffatomen.

Bevorzugt als Lösungsmittel sind Alkohole und aliphatische und cycloaliphatische Kohlenwasserstoffe, insbesondere Ethanol, Isopropanol, Hexan, Cyclohexan, Heptan oder Octan. Bevorzugt ist das Lösungsmittel Ethanol oder Heptan.

Als besonders bevorzugt gelten Lösungsmittelgemische eines Alkohols und eines aliphatischen oder cycloaliphatischen Kohlenwasserstoffes. Insbesondere solche von Ethanol oder Isopropanol mit Hexan oder Cyclohexan oder Heptan oder Octan. Als besonders bevorzugte Lösungsmittelmischung hat sich die Mischung von Ethanol und Heptan gezeigt.

Unter Verwendung eines solchen Lösungsmittels kann erreicht werden, dass homogen kleine Konzentrationen an Haftvermittlersubstanzen, d.h. an Organo-Siliziumverbindung und/oder Organo-Titanverbindung, auf den Silikonfilm aufgetragen werden können. Der Gehalt an Lösungsmittel ist derart gewählt, dass der Gehalt an Organo-Siliziumverbindung und / oder Organo-Titanverbindung von 1 bis 20 Gew.-%, insbesondere zwischen 2 bis 10 Gew.-%, aufweist.

Es kann jedoch durchaus auch vorteilhaft sein, dass die Haftvermittlerzusammensetzung keine Lösungsmittel enthält und Gehalt von Organo-Siliziumverbindung und/oder Organo-Titanverbindung von mehr als 90 Gew.-%, insbesondere von mehr als 99 Gew.-%, beträgt. Beispielsweise können hiermit durch VOC-Vorschriften auferlegte Limitierungen oder Nachteile vermieden werden oder es können allenfalls durch Lösungsmittel bedingte Eigenschaftsänderung des Silikonfilms ausgeschlossen werden.

Die Haftvermittlerzusammensetzung kann weitere Bestandteile umfassen. Besonders geeignet als weitere Bestandteile sind UV-Absorber sowie optische Aufheller. Optische Aufheller können beispielsweise zur Qualitätskontrolle genutzt werden, d.h. es kann als Tracer mittels Kontrolle von UV-Licht festgestellt werden, ob bei der Herstellung der thermisch gehärteten Silikonbeschichtung der Auftrag der Haftvermittlerzusammensetzung erfolgt ist oder nicht. Solche optischen Aufheller absorbieren UV-Licht und emittieren sichtbares, normalerweise blaues Licht. Ein bevorzugter optischer Aufheller stellt Ciba Uvitex® OB von Ciba Speciality Chemicals dar. Weitere geeignete **Aufheller sind beispielsweise** in *Kirk-Othmer, "Encyclopedia of Chemical Technology", 4th Ed., John Wiley & Sons, New York, Vol. 11, S. 227-241* angegeben.

Da das thermoplastische Material sowie die thermisch gehärtete Beschichtung darauf vielfach transparent sind können UV-Absorber dazu eingesetzt werden, dass ein mit der thermisch gehärteten Silikonbeschichtung verbundener Klebstoff vor UV-Strahlung geschützt werden kann, welches durch das thermoplastische Materials sowie die darauf befindliche thermisch gehärtete Silikonbeschichtung gelangt. Ein solcher UV-Schutz ist vor allem für Polyurethanklebstoffe sehr vorteilhaft. Die UV-Absorber können beispielsweise organischer Natur sein, wie beispielsweise solche aus der Tinuvin® -Produktelinie von Ciba Speciality Chemicals, oder sie können anorganischer Natur sein wie beispielsweise Farbpigmente, insbesondere Russ oder Titandioxid.

Es ist bevorzugt, wenn die Haftvermittlerzusammensetzung frei von Isocyanatgruppen-aufweisenden Verbindungen ist. Es wurde nämlich festgestellt, dass die Anwesenheit solcher Isocyanatgruppen-aufweisende Verbindungen in der Haftvermittlerzusammensetzung zu mechanischen Schwachstellen der damit hergestellten thermisch gehärteten Silikonbeschichtung führt. Es wird vermutet, dass die reaktiven Isocyanatgruppen vor dem Einbrennen oder während des Einbrennens mit der Silikonzusammensetzung reagieren und somit die Vernetzung der Silikonzusammensetzung stören.

Die Silikonzusammensetzung kann auf verschiedenste dem Fachmann bekannte Auftragsarten wie Sprühen, Eintauchen, Rollbeschichtung und so weiter, appliziert werden. Die Trockenfilmschichtdicke der Silikonzusammensetzung beträgt vorzugsweise etwa zwischen 5 und 15 Mikrometer. Es ist möglich dass mehrere Schichten nacheinander aufgetragen werden.

Weiterhin kann es nötig sein, dass vor dem Auftragen der Silikonbeschichtung ein Kunststoffprimer auf den thermoplastischen Kunststoffes aufgebracht werden muss, um eine gute Haftung der Silikonzusammensetzung auf dem thermoplastischen Kunststoff zu gewährleisten. Typischerweise ist die Schichtdicke eines solchen Kunststoffprimers 0.1 bis 3 Mikrometer. Unter einem ,Kunststoffprimer' wird hier und im gesamten vorliegenden Dokument ein Primer verstanden, welcher auf einen thermoplastischen Kunststoff vor dem Aufbringen einer Silikonzusammensetzung aufgetragen wird.

Weiterhin kann es von Vorteil sein, eine Zwischenschicht mit UVabschirmenden Substanzen oder Farben anzubringen. Solche Zwischenschichten können auch lediglich aus ästhetischen oder dekorativen Gesichtspunkten erwünscht sein.

Falls Zwischenschichten eingesetzt werden, können diese auch lediglich an gewissen Oberflächenstellen des thermoplastischen Kunststoffes beziehungsweise der darauf haftenden Schichtenerfolgen und müssen nicht zwangsweise vollflächig vorhanden sein. Als Bespiel hierfür sein eine Polycarbonatscheibe eines Automobils mit einer Abdeckzwischenschicht am Rand der Scheibe, wo der Klebstoff die Scheibe mit dem Karosserieflansch oder dem Alu- oder KTL-Stahl-Rahmen verklebt wird, erwähnt.

Die Silikonzusammensetzung muss zumindest teilweise abgelüftet werden. Das heisst es muss eine gewisse Zeit verstreichen, bis weitere Arbeitsschritte erfolgen können. In dieser Zeit bildet die Silikonzusammensetzung einen Film aus. Typischerweise erfolgt hier ein zumindest ein teilweises Abtrocknen durch Verdampfen eines Lösungsmittels und/oder eine Vorreaktion der reaktiven Bestandteile der Silikonzusammensetzung. Die Länge dieser Teil-Ablüftezeit und Umfang des Ablüftens ist sehr variabel und sehr abhängig von den Details der Formulierung der Silikonzusammensetzung. Sie ist aber mindestens so lange, bis die Silikonzusammensetzung einen Film, im Folgenden Silikonfilm genannt, gebildet hat. Diese Länge kann allenfalls durch Anblasen mit Luft, vor allem warmer Luft, oder mittels leichtem Erwärmen (aber deutlich unter der Einbrenntemperatur) des thermoplastischen Polymers innerhalb eines bestimmten Rahmens verkürzt werden. Typischerweise beträgt die Ablüftezeit jedoch mindestens 5 Minuten. Bevorzugt beträgt die Teil-Ablüftezeit zwischen 5 Minuten und 60 Minuten, insbesondere zwischen 5 und 30 Minuten, bevorzugt zwischen 5 bis 25 Minuten.

Anschliessend an das Teil-Ablüften wird die Haftvermittlerzusammensetzung auf den entstandenen Silikonfilm aufgetragen. Das Auftragen kann jedoch erfolgen bereits vor dem Zeitpunkt, dass die Silikonzusammensetzung vollständig abgelüftet ist. Das Auftragen der Zusammensetzung kann grundsätzlich auf sehr unterschiedliche Art erfolgen. Bevorzugte Applikationsart ist das Aufsprühen. Allenfalls kann hierfür eine Maske verwendet werden, um gezielt ein Muster zu applizieren oder gezielt einen Teilbereich zu behandeln. Die Menge der aufgetragenen Haftvermittlerzusammensetzung variiert als Folge des gegebenenfalls vorhandenen Lösungsmittel sehr stark. Bevorzugt wird die Haftvermittlerzusammensetzung in einer Menge von zwischen 10 und 200 g/m², insbesondere zwischen 30 und 100 g/m², auf den Silikonfilm aufgetragen. Es ist zu bevorzugen, dass 0.02 bis 40 g/m², insbesondere 0.1 bis 20 g/m², bevorzugt 0.5 bis 10 g/m², an Organo-Siliziumverbindung und / oder Organo-Titanverbindung auf den Silikonfilm aufgetragen wird.

Der Haftvermittlerzusammensetzungs-Auftrag kann in zwei oder mehreren aufeinander folgenden Schritten erfolgen. Hierbei kann ein nachfolgender Auftrag nass-in-nass oder erst nach dem Ablüften des bereits erfolgten Haftvermittlerzusammensetzungs-Auftrags aufgebracht werden. Bevorzugt liegt zwischen zwei aufeinanderfolgenden Haftvermittlerzusammensetzungs-Aufträgen eine Zeit von 10 Sekunden bis 1 Minute. Mittels mehrmaligen Haftvermittlerzusammensetzungs-Aufträgen kann einfach eine höhere Konzentration an Haftvermittlersubstanz, d.h. an Organo-Siliziumverbindung und / oder Organo-Titanverbindung, homogen aufgetragen werden.

Anschliessend an das Auftragen der Haftvermittlerzusammensetzung erfolgt vorzugsweise ein Ablüftungsschritt. Dieser Schritt dient insbesondere dazu, um allfällig vorhandenen Lösungsmitteln vor dem Einbrennprozess verdampfen zu lassen. Dies ist aus arbeitssicherheitstechnischen Aspekten vorteilhaft oder wünschenswert, um eine bessere Oberflächengüte der Beschichtung zu gewährleisten. Ohne den Abdampfungsschritt wäre diese unter Umständen durch während dem Einbrennen der Beschichtung entweichende Lösungsmittel in Frage gestellt. Bei Haftvermittlerzusammensetzungen ohne Lösungsmittel ist ein solches Ablüften jedoch üblicherweise nicht nötig.

Die Ablüftezeit der Haftvermittlerzusammensetzung ist stark abhängig vom verwendeten Lösungsmittel und beträgt üblicherweise zwischen 10 Sekunden und 1 Tag, insbesondere zwischen 10 Sekunden und 5 Minuten, bevorzugt zwischen 30 Sekunden und 3 Minuten.

Der Fertigungsprozess erfährt üblicherweise durch das Ablüften bedingt keine Verlangsamung, denn die Zeitspanne des Transportes zwischen der Orte des Auftrages von Haftvermittlerzusammensetzung und des Einbrennens ist typischerweise viel kürzer als die Ablüftzeit der Haftvermittlerzusammensetzung.

Weiterhin erfolgt typischerweise durch den zusätzlichen Auftrag der Haftvermittlerzusammensetzung und allenfalls dessen Ablüften auch keine Verlangsamung des Fertigungsprozesses, da der Auftrag der Haftvermittlerzusammensetzung typischerweise vor dem vollständigen Ablüften der Silikonzusammensetzung erfolgt.

Nach dem Auftragen der Haftvermittlerzusammensetzung und gegebenenfalls nach dessen Ablüften wird die Beschichtung bei einer Temperatur von zwischen 80°C und 200°C eingebrannt. Die Einbrenntemperatur und -Dauer ist vorzugsweise auf die Silikonzusammensetzung und den thermoplastischen Kunststoff abgestimmt.

Üblicherweise erfolgt das Einbrennen bei einer Temperatur zwischen 100 und 140 °C, insbesondere zwischen 120 und 130°C, typischerweise während einer Einbrenndauer zwischen 30 und 90 Minuten, insbesondere zwischen 40 und 60 Minuten. Es kann von Vorteil sein, dass die Einbrenntemperatur während dem Einbrennprozess nicht konstant ist sondern einem Temperaturprofil folgt. Das Einbrennen erfolgt üblicherweise in Öfen. Weitere Details zum Einbrennen von Silikonzusammensetzungen zur Herstellung von thermisch gehärteten Silikonbeschichtungen auf einem thermoplastischen Kunststoff sind dem Fachmann aus den bereits bei der Beschreibung der Silikonzusammensetzungen genannten Stand der Technik bekannt.

Durch den Einbrennprozess wird die Silikonbeschichtung gehärtet, das heisst die Silikonbeschichtung härtet aus und bildet ein Netzwerk. Wenn auch derzeit keine experimentellen Beweise vorliegen, wird davon ausgegangen, dass eine wie vorgängig beschrieben thermisch gehärtete Silikonbeschichtung oberflächennah im Vergleich eine grösserer Konzentration an von der Haftvermittlerzusammensetzung herrührende Zusammensetzung aufweist, als sie nahe an der Grenzfläche Silikonbeschichtung/thermoplastsicher Kunststoff ist.

Die thermisch gehärteten Silikonbeschichtungen weisen eine ausgezeichnete Langzeitstabilität aus und neigen insbesondere zu keiner oder lediglich geringer Spannungsrissbildung, wodurch eine Langlebigkeit der Beschichtung gewährleistet werden kann.

Eine derartig hergestellte thermisch gehärtete Silikonbeschichtung ist überraschenderweise bestens geeignet zum primerlosen Verkleben mit diversen Klebstoffen.

Haftung ohne die Verwendung eines Klebstoffprimers ist nicht gegeben, wenn Silikonbeschichtungen ohne den Schritt des Auftragens von Haftvermittlerzusammensetzung auf den Silikonfilm hergestellt werden. Unter einem "Klebstoffprimer" wird hier und im gesamten Dokument ein Primer verstanden, welcher auf eine thermisch gehärtete Silikonbeschichtung gebracht wird, auf welchen ein Klebstoff appliziert wird oder werden kann.

Haftung ohne die Verwendung eines Klebstoffprimers ist ebenfalls nicht gegeben, wenn die Haftvermittlerzusammensetzung nass-in-nass direkt nach dem Auftrag der Silikonzusammensetzung aufgetragen wird, das heisst wenn thermisch gehärtete Silikonbeschichtungen ohne den Schritt des zumindest Teil-Ablüftens der Silikonbeschichtung unter Bildung eines Silikonfilms hergestellt werden.

Haftung ohne die Verwendung eines Klebstoffprimers ist üblicherweise ebenfalls nicht gegeben, wenn der Auftrag der Haftvermittlerzusammensetzung nach und nicht vor dem Einbrennen erfolgt.

Bevorzugte Klebstoffe sind solche auf Basis von Epoxidharz, von (Meth)acrylat-Gruppen aufweisenden Monomeren oder Oligomeren, von Alkoxysilan-terminierten Prepolymeren oder von Isocyanat-terminierten Prepolymeren.

Als geeignete Klebstoffe auf Basis von Epoxidharzen werden einerseits zweikomponentige Klebstoffe betrachtet, bei welchen die eine Komponente ein Amin- oder Merkaptanhärter und die zweite Komponente ein Diglcidylether von Bisphenol-A oder Bisphenol-F oder Bisphenol-A/F umfassen. Beispiele für solche 2-komponentigen Epoxidharz-Klebstoffe sind solche aus Sikadur® -Produktelinie, wie sie kommerziell erhältlich sind von Sika Schweiz AG.

Als geeignete Klebstoffe auf Basis von Epoxidharzen werden weiterhin einkomponentige hitzehärtende Epoxidharz-Klebstoffe betrachtet. Solche Klebstoffe enthalten üblicherweise einen Härter, welcher erst bei höher Temperatur frei oder aktiv wird. Beispiele für einen solchen Härter ist Dicyandiamid (dicy). Als besonders bevorzugte 1-komponentigen hitzehärtenden Epoxidharz-Klebstoffe sind solche mit erhöhter Schlagzähigkeit, wie sie beispielsweise in EP 1 359 202 A1 offenbart sind. Beispiele für 1-komponentige hitzehärtenden Epoxidharz-Klebstoffe sind solche aus SikaPower® -Produktelinie, wie sie kommerziell erhältlich sind von Sika Schweiz AG.

Als geeignete Klebstoffe auf Basis von (Meth)acrylat-Gruppen aufweisenden Monomeren oder Oligomeren sind insbesondere zweikomponentige raumtemperaturhärtende (Meth)acrylat-Klebstoffe zu verstehen, welche in einer ersten Komponente einen Radikalinitiator, insbesondere organische Peroxide, bevorzugt Benzoylperoxid, umfasst und in einer zweiten Komponente (Meth)acrylat-gruppen aufweisende Monomere oder Oligomere enthalten. Beispiele für zweikomponentige raumtemperaturhärtende (Meth)acrylat-Klebstoffe sind solche aus SikaFast® -Produktelinie, wie sie kommerziell erhältlich sind von Sika Schweiz AG.

Als geeignete Klebstoffe auf Basis von Alkoxysilan-terminierten Prepolymeren sind einkomponentige feuchtigkeitshärtende Klebstoffe die sogenannte MS-Polymere oder Alkoxysilan-terminierte Polyurethanprepolymere, insbesondere solche wie sie hergestellt aus Polyolen und Isocyanaten mit anschliessender Reaktion eines Isocyant-reaktiven Organosilanes oder einem Isocyanat-funktionellen Organosilanes hergestellt werden.

Als geeignete Klebstoffe auf Basis von Isocyanat-terminierten Prepolymeren sind einerseits zweikomponentige Polyurethanklebstoffe zu verstehen, deren erste Komponente ein Amin- oder ein Polyol umfassen und deren zweite Komponente eine NCO-haltiges Prepolymer umfassen. Beispiele für solche zweikomponentige raumtemperaturhärtende Polyurethan -Klebstoffe sind solche aus SikaForce ® -Produktelinie, wie sie kommerziell erhältlich sind von Sika Schweiz AG.

Als geeignete Klebstoffe auf Basis von Isocyanat-terminierten Prepolymeren sind weiterhin reaktive Polyurethan-Heissschmelzklebstoffe zu verstehen, die eine thermoplastisches Polymer sowie ein Isocyanat-terminierten Prepolymeren oder ein thermoplastisches Isocyanat-terminierten Prepolymeren enthalten. Solche reaktiven Polyurethan-Heissschmelzklebstoffe werden aufgeschmolzen und verfestigen sich einerseits beim Abkühlen und vernetzen andererseits über eine Reaktion mit Luftfeuchtigkeit.

Als geeignete Klebstoffe auf Basis von Isocyanat-terminierten Prepolymeren sind weiterhin einkomponentige feuchtigkeitshärtende Polyurethanklebstoffe zu verstehen. Solche Klebstoffe vernetzen unter dem Einfluss von Feuchtigkeit, insbesondere von Luftfeuchtigkeit. Beispiele für solche einkomponentige feuchtigkeitshärtende Polyurethanklebstoffe sind solche aus SikaFlex®- und SikaTack®- Produktelinie, wie sie kommerziell erhältlich sind von Sika Schweiz AG.

Die oben erwähnten Isocyanat-terminierten Prepolymeren werden aus Polyolen, insbesondere Polyoxyalkylenpolyolen, und Polyisocyanaten, insbesondere Diisocyanaten, hergestellt.

Bevorzugt sind Klebstoffe auf Basis von Isocyanat-terminierten Prepolymeren.

Beim Verkleben wird der Klebstoff wird mit der thermisch gehärteten Silikonbeschichtung ohne dessen vorgängige Vorbehandlung mittels Klebstoffprimer in Kontakt gebracht. Weiterhin wird beim Verkleben die thermisch gehärtete Silikonbeschichtung mittels eines Klebstoffes mit einem weiteren Fügepartner verklebt.

Das Verkleben kann einerseits dadurch erfolgen, dass der Klebstoff auf die thermisch gehärteten Silikonbeschichtung appliziert wird und anschliessend mit einem weiteren Fügepartner verklebt wird oder der Klebstoff wird zuerst auf einen weiteren Fügepartner appliziert und anschliessend mit auf der thermisch gehärteten Silikonbeschichtung verklebt. Weiterhin ist es möglich, dass der Klebstoff in eine Spalte, die von thermisch gehärteten Silikonbeschichtung und weiteren Fügepartner gebildet wird, eingepresst wird. Eine weitere Applikationsart ist eine nicht bevorzugte, bei der Klebstoff sowohl auf die thermisch gehärtete Silikonbeschichtung als auch den weiteren Fügepartner appliziert wird und diese anschliessend miteinander verbunden werden.

Nach dem Fügen der Fügepartner erhärtet der Klebstoff und verbindet damit die Fügepartner dauerhaft. Ein derart gebildeter Verbundkörper weist bei verschiedensten Klima-Bedingungen eine dauerhafte Haftung auf und kann hohe mechanische Belastungen übertragen.

Die thermisch gehärteten Silikonbeschichtung wird nicht mit einem Klebstoffprimer vorbehandelt, es kann aber durchaus von Vorteil sein, dass sie vor dem Verkleben gereinigt wird. Eine solche Reinigung umfasst insbesondere ein Abwischen, vorzugsweise mit einem leicht flüchtigen Lösungsmittel. Das Lösungsmittel sollte vorzugsweise inert gegenüber der Beschichtung sein. Weiterhin ist hierbei darauf zu achten, dass das Lösungsmittel möglichst vollständig entfernt ist, bevor der Klebstoff auf die gereinigte Oberfläche appliziert wird oder damit in Kontakt tritt.

Der weitere Fügepartner kann aus diversen Materialien sein. Bevorzugt sind einerseits Kunststoffe, anderseits Metalle und schliesslich Glas und Glaskeramiken. Als Kunststoffe sind die in der Klebetechnologie üblichen Kunststoffe als relevant zu betrachten. In einem besonders bevorzugten Fall ist der weitere Fügepartner ebenfalls ein thermisch gehärteten Silikonbeschichtung, beziehungsweise ein mit einer thermisch gehärteten Silikonbeschichtung überzogener thermoplastischer Kunststoff. Somit ist es auch möglich dass der weitere Fügepartner identisch mit der erfindungsgemässen thermisch gehärteten Silikonbeschichtung, beziehungsweise der damit überzogene thermoplastischer Kunststoff ist.

Als Metalle sind insbesondere die Metalle und Legierungen von Eisen, Aluminium, Kupfer, Chrom bevorzugt. Als besonders bevorzugt sind Stähle und Aluminium sowie dessen Legierungen. Besonders bevorzugt sind die Metalle lackiert. Als Lack werden insbesondere Automobillacke bevorzugt.

Glas und Glaskeramiken sind ebenfalls bevorzugte Substrate. Insbesondere ist Glas, welches als Floatglas bezeichnet wird, sowie die daraus hergestellten Artikel, insbesondere Scheiben, bevorzugt. Als Glaskeramiken sind insbesondere solche bevorzugt, welche mittels Siebdruck aufgetragen und anschliessend eingebrannt werden.

Der weitere Fügepartner kann mit einem Primer oder einer Haftvermittlerzusammensetzung vor dem Verkleben vorbehandelt sein oder nicht. Dies hängt stark vom Material des Fügepartners beziehungsweise den klimatischen Bedingungen ab, wo ein solcher Verbund eingesetzt werden soll.

Bevorzugt stellt ein derart gebildeter Verbundkörper ein Fahrzeug, insbesondere ein Automobil, oder ein Teil davon dar. Es ist im Automobilbau häufig, dass verklebte Module zum Einsatz kommen oder Komponenten an der Fertigungslinie verklebt werden.

Als besonders bevorzugt ist das Verkleben von Scheiben aus einem transparenten Kunststoff, insbesondere aus Polycarbonat, die mit einer erfindungsgemässen Beschichtung überzogen sind, mit der Karosserie eines Fahrzeugs, insbesondere eines Automobils, wobei die Verklebung üblicherweise an einem Flansch oder Rahmen erfolgt. Die Karosserie, beziehungsweise der Flansch oder Rahmen, ist typischerweise aus einem lackierten Metall gefertigt. Besonders bevorzugte Ausführungsformen sind Dachfenster- und Seitenscheibenfenster.

Eine weitere bevorzugte Ausführungsform der Erfindung ist ein Scheinwerferstreuscheibe aus mit einer erfindungsgemässen thermisch gehärteten Silikonbeschichtung überzogenen Polycarbonat, beziehungsweise ein Scheinwerfer, der aus einer Verklebung einer solchen Scheinwerferstreuscheibe und einem Scheinwerfergehäuse resultiert.

Weitere Möglichkeiten für erfindungsgemässe Ausführungsformen ergeben sich aus den Anwendungsgebieten von thermoplastischen Kunststoffen, die mit einer erfindungsgemässen thermisch gehärteten Silikonbeschichtung überzogenen sind, und insbesondere bei denen, wo solche Materialien verklebt werden oder werden sollen.

So finden die thermoplastischen Kunststoffe, die mit einer erfindungsgemässen thermisch gehärteten Silikonbeschichtung überzogenen sind, Einsatz in der Herstellung beispielsweise als Lampengehäuse, Sicherheitsbrillen, Birnenabdeckungen, Displayabdeckungen, Sicherheitsgläser und Sicherheitsscheiben, Überdachungen, Datenträger wie CD oder DVD oder ähnliches etc, insbesondere dort, wo in der Herstellung dieser Gegenstände Klebstoff eingesetzt wird, oder dort wo diese Gegenstände mit anderen Fügepartnern verklebt werden.

Eine neuere Anwendung von thermoplastischen Kunststoffen, nämlich für OLEDs-Folien (Organic Light Emitting Diods) ist ebenfalls Gegenstand der Erfindung. Hierbei sind im thermoplastischen Kunststoff organische Moleküle eingelagert, die durch Anlegen von Strom gezielt zum Leuchten angeregt werden können und damit zum Darstellen von Informationen benutzt werden können. Die Wirkungsweise und Herstellung solcher OLEDs ist bekannt, z.B. aus *Matthias Rehan, "Elektrisch leitfähige Kunststoffe", Chemie in Unserer Zeit 2003, S.17-30,* oder aus US 6,703,184 oder US 5,247,190. Solche OLEDs können als Folien für OLED-Displays genutzt werden. OLEDs-Displays werden bereits von Cambridge Technology und Kodak kommerzialisiert. Für den Schutz dieser OLEDs-Folien können nun die thermoplastischen Kunststoffe mit einer thermisch gehärteten Silikonbeschichtung mit dem erfindungsgemässen Verfahren beschichtet werden. Insbesondere sind solche Folien als dünne Display-Einheiten für Computer geeignet und können auch als Informationsträger für Werbezwecke verwendet werden. Als wichtige Eigenschaft dieser Folien ist ihre kleine Dicke und die daraus resultierende Flexibilität, die eine Darstellung von Informationen erlaubt, wie sie mit traditioneller Informationstechnologie nicht erreicht werden kann. So kann eine solche Folie gerollt werden oder den Konturen eines Körpers vollständig angepasst werden, so dass komplexe Geometrien erreicht werden können.

All diesen Anwendungen ist es gemein, dass eine Verklebung des mit einer thermisch gehärteten Silikonbeschichtung überzogenen Folien aus Polycarbonat besonders erwünscht ist. Deshalb stellt eine erfindungsgemässe thermische gehärtete Silikonbeschichtung, die ohne ein Behandeln mittels Klebstoffprimer möglich ist, einen technologischen und ökonomischen Vorteil dar.

### Beispiele

### Herstellung der Haftvermittlerzusammensetzungen

**Tabelle 1. Verwendete Substanzen.**

| | Name | Chemische Bezeichnung |
|---|---|---|
| A1120 | Silquest A-1120 Silane (GE Silicones) | N-(2-Aminoethyl)-3-aminopropyl-tri-methoxysilan |
| A1170 | Silquest A-1170 Silane (GE Silicones) | Bis[3-(trimethoxysilyl)-propyl]-amin |
| (BuO)₄Ti | Titan(IV)-butoxid (Fluka AG) | Tetra(n-Butyl)titanat |
| Heptan | Heptan, puriss. (Fluka AG) | Heptan |
| EtOH | Ethanol, absolut (Fluka AG) | Ethanol |
| SA | Sika®Aktivator (Sika Schweiz AG) | Aminoalkylalkoxysilan / Titanat in Kohlenwasserstoff/Ethanol-Gemisch |

Es wurden die Haftvermittlersubstanzen ***HV1*** bis ***HV8*** nach Tabelle 2, indem die Organo-Siliziumverbindung und/oder Titanverbindung unter Inertatmosphäre zum jeweiligen Lösungsmittel unter Rühren zugegeben wurde und anschliessend 1 Stunde weitergerührt wurde. Die Haftvermittlerzusammensetzungen wurden anschliessend in Glasflaschen abgefüllt und dicht verschlossen.

**Tabelle 2. Haftvermittlerzusammensetzungen (Zahlen in Gew.-%).**

| | ***Ref.1*** | ***Ref.2*** | ***HV1*** | ***HV2*** | ***HV3*** | ***HV4*** | ***HV5*** | ***HV6*** | ***HV7*** | ***HV8*** |
|---|---|---|---|---|---|---|---|---|---|---|
| A1120 | | | | | 20 | 20 | | | 10 | |
| A1170 | | | 10 | 20 | | | 20 | | | 10 |
| (BuO)₄Ti | | | | | | | | 20 | 10 | 10 |
| Heptan | | 100 | | | | 80 | 80 | 80 | 80 | 80 |
| EtOH | 100 | | 90 | 80 | 80 | | | | | |

### Herstellung der thermisch gehärteten Silikonbeschichtungen

Alle Beschichtungsversuche erfolgten bei 23°C und 50% relativer Luftfeuchtigkeit. Es wurden Makrolon® AL2647 Polycarbonat-Platten von Bayer als Substrat verwendet. Die Platten der Dimensionen 10cm x 15 cm x 3 mm wurden vor der Verwendung mittels Abwischen mit einem mit Isopropanol getränkten fuselfreien Tuch gereinigt und anschliessend 3 Minuten lang abgelüftet.

Als Silikonzusammensetzungen wurden PHC 587 und AS4700, beide kommerziell erhältlich von GE Silicones, verwendet. Bei der Verwendung von AS4700 wurden die Polycarbonatplatten zuerst mit dem dafür empfohlenen Kunststoffprimer SHP470 Basecoat von GE Silicones fliessbeschichtet, das heisst der Kunststoffprimer wurde mittels Spritzflasche homogen auf die vertikal gestellte Platte gespritzt und in dieser Position 20 Minuten an der Luft trocknen gelassen. Anschliessend wurde die beschichtete Platte während 25 Minuten bei 125°C in einem Umluftofen wärmebehandelt.

Es wurden PHC 587 auf die gereinigten vertikal gestellten Polycarbonatplatten, respektive AS4700 auf die geprimerten vertikal gestellten Polycarbonatplatten mittels Spritzflasche homogen auf die vertikal gestellte Platte gespritzt, während der in Tabellen 3 bis 7 als ,Tₓ' angegebenen Teil-Ablüftezeit in vertikaler Position trocknen gelassen und anschliessend die jeweiligen Haftvermittlerzusammensetzungen ***HV1*** bis ***HV8*,** beziehungsweise Sika® Aktivator **(*SA*),** in einer Menge von 50 g/m² auf die vertikal gestellten Platten durch Aufsprühen aufgetragen. Bei gewissen Experimenten ***(B11, B14***_{,} ***B17***, ***B20*** und ***B25***) wurde dieses Aufsprühen unmittelbar danach noch einmal durchgeführt, was zu einer doppelten Auftragsmenge führt. Anschliessend wurde eine in Tabellen 3 bis 7 als ,Ty' angegebene Zeit gewartet, bis der vertikal gehaltene beschichtete Probekörper in einen bei 125°C bzw. 130°C temperierten Umluftofen eingebracht und während 45 Minuten bei 125°C für AS4700-basierende Silikonbeschichtungen, respektive während 50 Minuten bei 130°C für PHC 587-basierende Silikonbeschichtungen, liegend eingebrannt wurden. Auf derart hergestellten thermisch gehärteten Silikonbeschichtungen wurden nach dem Abkühlen innerhalb von 3 Stunden die Klebstoffe aufgetragen und die Haftung wie folgt beschrieben bestimmt.
Auf die Oberfläche der thermisch gehärteten Silikonbeschichtungen wurde jeweils Rundraupen der einkomponentigen, feuchtigkeitshärtenden Polyurethanklebstoffen Sikaflex®-221 (,SF221'), SikaTack®-Plus (,STP') und SikaTack®-Ultrafast (,STUF') (alle kommerziell erhältlich bei Sika Schweiz AG) mittels Auspresskartusche und Düse aufgetragen.

Der Klebstoff wurde nach einer Aushärtezeit von 7 Tagen Klimaraumlagerung (,KL') (23°C, 50% rel. Luftfeuchtigkeit), sowie nach einer anschliessenden Wasserlagerung (,WL') in Wasser bei 23°C während 7 Tagen, sowie nach einer anschliessend Kataplasma-Lagerung (,CP') von 7 Tagen bei 70°C, 100 % rel. Luftfeuchtigkeit, getestet.

Die Haftung des Klebstoffes wurde mittels ,Raupentest' getestet. Hierbei wird die Raupe am Ende knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebestoff (Kohäsionsbruch). Die Bewertung der Hafteigenschaften erfolgt durch Abschätzen der kohäsiven Anteils der Haftfläche:
1 = > 95 % Kohäsionsbruch
2 = 75 - 95 % Kohäsionsbruch
3 = 25 - 75 % Kohäsionsbruch
4 = < 25 % Kohäsionsbruch
5 = 0% Kohäsionsbruch (rein adhäsiver Bruch)

Durch den Zusatz ,B' wird angezeigt, dass sich die thermisch gehärtete Silikonbeschichtung vom Polycarbonat ablöst und deshalb die Silikonbeschichtung eine Schwachstelle darstellt. Testresultate mit Kohäsionsbrüchen von weniger als 75% gelten typischerweise als ungenügend.

**Tabelle 3. Klebstoffhaftung auf mit thermisch gehärteten Silikonbeschichtungen überzogenen Polycarbonat (PHC587 als Silikonzusammensetzung).**

| PHC587 | | | | | SF221 | | | STP | | | STUF | | |
|---|---|---|---|---|---|---|---|---|---|---|---|---|---|
| Beschichtung | Haftver -mittler | Tₓ [min] | #* | T_{y} [min] | KL | WL | CP | KL | WL | CP | KL | WL | CP |
| ***R1*** | - | - | - | - | 5 | 5 | 5 | 5 | 5 | 5 | 5 | 5 | 5 |
| ***R2*** | ***Ref.1*** | 10 | 1 | 10 | 5 | 5 | 5 | 5 | 5 | 5 | 5 | 5 | 5 |
| ***R3*** | ***Ref.2*** | 10 | 1 | 10 | 5 | 5 | 5 | 5 | 5 | 5 | 5 | 5 | 5 |
| ***B1*** | ***HV1*** | 10 | 1 | 10 | 4 | 5 | 4B | 5 | 5 | 5 | 5 | 5 | 5 |
| ***B2*** | ***HV2*** | 10 | 1 | 10 | 2 | 3 | 3 | 3 | 2 | 5B | 2/3 | 3 | 5B |
| *B3* | *HV3* | 10 | 1 | 10 | 4 | 4 | 5B | 3 | 3 | 5B | 3 | 4 | 5B |
| ***B4*** | ***HV4*** | 10 | 1 | 10 | 2 | 1 | 3 | 2 | 4 | 5B | 1 | 1 | 5B |
| ***B5*** | ***HV5*** | 10 | 1 | 10 | 1 | 1 | 5B | 4 | 4 | 5B | 1 | 1 | 5B |
| ***B6*** | ***HV6*** | 10 | 1 | 10 | 3 | 3 | 3B | 5 | 5 | 4B | 5 | 5 | 4B |
| ***B7*** | ***HV7*** | 10 | 1 | 10 | 2 | 2 | 5B | 2 | 1 | 5B | 1 | 2 | 5B |
| ***B8*** | ***HV8*** | 10 | 1 | 10 | 4 | 4 | 5B | 4 | 3 | 5B | 3 | 2 | 5B |
| ***B9*** | ***SA*** | 10 | 1 | 10 | 1 | 2 | 3 | 3 | 2 | 5B | 3 | 2 | 5B |

| | | | | | | | | | | | | | |
|---|---|---|---|---|---|---|---|---|---|---|---|---|---|
| * = Anzahl Haftvermittlerzusammensetzungsaufträge | | | | | | | | | | | | | |

Die Haftresultate aus Tabelle 3 zeigen, dass durch den Auftrag an Haftvermittlerzusammensetzung, insbesondere nach Klimaraum- und Wasserlagerung stark verbessert wird, während bei den Referenz-Silikonbeschichtungen ***R1**, **R2*** und ***R3*** keine Haftung erzielt wurde. Die Haftung nach Kataplasma-Lagerung konnte je nach Klebstoff und Haftvermittlerzusammensetzung ebenfalls eine zum Teil markante Verbesserung festgestellt werden.

Die Haftresultate aus Tabelle 4 zeigen, wie auch der Vergleich von ***B1*** mit ***B2*** aus Tabelle 3, dass im Vergleich zu den Referenzbeispielen die Haftung stark verbessert wird, wenn eine kritische Menge an Haftvermittlersubstanzen, welche auf den Silikonfilm aufgetragen wird, überschritten wird. Andererseits zeigen die Resultate auch, dass zu kurze Teil-Ablüftezeiten (Tₓ= 1 Min.) zu keiner oder zu lediglich geringfügigen Verbesserung der Haftungen führen. Durch den Auftrag an Haftvermittlerzusammensetzung wurde die Haftung, insbesondere nach Klimaraum- und Wasserlagerung stark verbessert, während bei den Referenz-Silikonbeschichtungen ***R1, R2*** und ***R3*** keine Haftung erzielt wurde. Bei der Haftung nach Kataplasma-Lagerung konnte ebenfalls je nach Klebstoff und Haftvermittlerzusammensetzung eine zum Teil markante Verbesserung festgestellt werden. Es zeigte sich weiterhin, dass besonders eine Mischung Organo-Siliziumverbindung/Organo-Titanverbindung ***(HV8, SA)*** enthaltenden Haftvermittlerzusammensetzungen nach Kataplasma-Lagerung insbesondere bei Sikaflex®-221 zu einer starken Haftverbesserungen führten.

**Tabelle 4. Klebstoffhaftung auf mit thermisch gehärteten Silikonbeschichtungen überzogenen Polycarbonat (PHC587 als Silikonzusammensetzung). Einfluss von Menge und Teil-Ablüftezeit.**

| PHC587 | | | | | SF221 | | | STP | | | STUF | | |
|---|---|---|---|---|---|---|---|---|---|---|---|---|---|
| Beschichtung | Haftvermittler | Tₓ [min] | #* | T_{y} [min] | KL | WL | CP | KL | WL | CP | KL | WL | CP |
| ***R2*** | ***Ref.1*** | 10 | 1 | 10 | 5 | 5 | 5 | 5 | 5 | 5 | 5 | 5 | 5 |
| ***R3*** | ***Ref.2*** | 10 | 1 | 10 | 5 | 5 | 5 | 5 | 5 | 5 | 5 | 5 | 5 |
| | | | | | | | | | | | | | |
| ***B10*** | ***HV2*** | 1 | 1 | 19 | 5 | 5 | 3 | 4 | 4 | 5 | 4 | 4 | 4 |
| ***B2*** | ***HV2*** | 10 | 1 | 10 | 2 | 3 | 3 | 3 | 2 | 5B | 2/3 | 3 | 5B |
| ***B11*** | ***HV2*** | 10 | 2 | 10 | 2 | 2 | 3 | 2 | 2 | 5B | 1 | 2 | 4B |
| ***B12*** | ***HV2*** | 20 | 1 | 0 | 2 | 2 | 4B | 4 | 2 | 5B | 3 | 2 | 5B |
| | | | | | | | | | | | | | |
| ***B13*** | ***HV3*** | 1 | 1 | 19 | 5 | 5 | 5B | 5 | 5 | 5B | 5 | 5 | 5B |
| ***B3*** | ***HV3*** | 10 | 1 | 10 | 4 | 4 | 5B | 3 | 3 | 5B | 3 | 4 | 5B |
| ***B14*** | ***HV3*** | 10 | 2 | 10 | 2 | 3 | 5B | 3 | 2/3 | 5B | 2 | 3 | 5B |
| ***B15*** | ***HV3*** | 20 | 1 | 0 | 4 | 5 | 5B | 4 | 4 | 5B | 4 | 4 | 5B |
| | | | | | | | | | | | | | |
| ***B16*** | ***HV8*** | 1 | 1 | 19 | 5 | 5 | 3B | 5 | 5 | 5 | 5 | 5 | 5 |
| ***B8*** | ***HV8*** | 10 | 1 | 10 | 4 | 4 | 5B | 4 | 3 | 5B | 3 | 2 | 5B |
| ***B17*** | ***HV8*** | 10 | 2 | 10 | 2 | 4 | 5B | 3 | 3 | 5B | 2 | 3 | 5B |
| ***B18*** | ***HV8*** | 20 | 1 | 0 | 1 | 1 | 5B | 4 | 4 | 5B | 3 | 2 | 5B |
| | | | | | | | | | | | | | |
| ***B19*** | ***SA*** | 1 | 1 | 19 | 5 | 5 | 4B | 5 | 5 | 5B | 5 | 5 | 5B |
| ***B9*** | ***SA*** | 10 | 1 | 10 | 1 | 2 | 3 | 3 | 2 | 5B | 3 | 2 | 5B |
| ***B20*** | ***SA*** | 10 | 2 | 10 | 1 | 1 | 3 | 2 | 1 | 5B | 1 | 2 | 5B |
| ***B21*** | ***SA*** | 20 | 1 | 0 | 2 | 2 | 5B | 1 | 2 | 5B | 2 | 1 | 5B |

| | | | | | | | | | | | | | |
|---|---|---|---|---|---|---|---|---|---|---|---|---|---|
| * = Anzahl Haftvermittlerzusammensetzungsaufträge | | | | | | | | | | | | | |

**Tabelle 5. Klebstoffhaftung von auf mit thermisch gehärteten Silikonbeschichtungen überzogenen Polycarbonat (AS4700 als Silikonzusammensetzung).**

| AS4700 | | | | | SF221 | | | STP | | | STUF | | |
|---|---|---|---|---|---|---|---|---|---|---|---|---|---|
| Beschichtung | Haftvemittler | Tₓ [min] | #* | T_{y} [min] | KL | WL | CP | KL | WL | CP | KL | WL | CP |
| ***R4*** | - | - | - | - | 5 | 5 | 5 | 5 | 5 | 5 | 5 | 5 | 5 |
| ***R5*** | ***Ref.1*** | 10 | 1 | 10 | 5 | 5 | 5 | 5 | 5 | 5 | 5 | 5 | 5 |
| ***R6*** | ***Ref.2*** | 10 | 1 | 10 | 5 | 5 | 5 | 5 | 5 | 5 | 5 | 5 | 5 |
| ***B22*** | ***HV5*** | 10 | 1 | 10 | 4 | 4 | 1 | 4 | 4 | 3 | 4 | 4 | 2 |
| ***B23*** | ***HV8*** | 10 | 1 | 10 | 4 | 3 | 1 | 4 | 5 | 3 | 4 | 5 | 3 |
| ***B24*** | ***SA*** | 10 | 1 | 10 | 3 | 1 | 1 | 3 | 2 | 2 | 1 | 2 | 1 |
| ***B25*** | ***SA*** | 10 | 2 | 10 | 2 | 1 | 1 | 2 | 1 | 2 | 1 | 1 | 1 |

| | | | | | | | | | | | | | |
|---|---|---|---|---|---|---|---|---|---|---|---|---|---|
| * = Anzahl Haftvermittlerzusammensetzungsaufträge | | | | | | | | | | | | | |

In Tabelle 5 sind Haftungen von thermisch gehärteten Silikonbeschichtungen, welche auf einer anderen Silikonzusammensetzung als diejenigen von Tabellen 3 und 4 basieren, aufgeführt. Verglichen mit den analogen Silikonbeschichtungen aus Tabelle 3 zeigen sich zwar gewisse Unterschiede. Es zeigt sich aber auch hier, dass die Haftungen der erfindungsgemässen Silikonbeschichtungen im Vergleich zu den Referenzbeschichtungen generell stark verbessert wurden, und dass der Einsatz der Organo-Titanverbindungen enthaltenden Haftvermittlerzusammensetzungen zu stark verbesserten Haftungen, insbesondere nach Kataplasma-Lagerungen, führte.

Tabellen 6, 7 und 8 zeigen, dass es wichtig ist, den Schritt des Auftrages der Haftvermittlerzusammensetzung an der richtigen Stelle im Herstellprozess anzuordnen.

**Tabelle 6. Klebstoffhaftung von auf mit thermisch gehärteten Silikonbeschichtungen überzogenen Polycarbonat (PHC587 als Silikonzusammensetzung).**

| PHC587 | | | | | SF221 | | | STP | | | STUF | | |
|---|---|---|---|---|---|---|---|---|---|---|---|---|---|
| Beschichtung | Haftvermittler | Tₓ [min] | #* | T_{y} [min] | KL | WL | CP | KL | WL | CP | KL | WL | CP |
| ***R1*** | - | - | - | - | 5 | 5 | 5 | 5 | 5 | 5 | 5 | 5 | 5 |
| ***R2*** | ***Ref.1*** | 10 | 1 | 10 | 5 | 5 | 5 | 5 | 5 | 5 | 5 | 5 | 5 |
| ***R3*** | ***Ref.2*** | 10 | 1 | 10 | 5 | 5 | 5 | 5 | 5 | 5 | 5 | 5 | 5 |
| ***B9*** | ***SA*** | 10 | 1 | 10 | 1 | 2 | 3 | 3 | 2 | 5B | 3 | 2 | 5B |
| ***R7*** | ***SA*** | 0 | 1 | 20 | 5 | 5 | 5 | 5 | 5 | 5 | 5 | 5 | 5 |
| ***R8*** | ***SA*** | - | 1 | 10** | 5 | 5 | 5 | 5 | 5 | 5 | 5 | 5 | 5 |

| | | | | | | | | | | | | | |
|---|---|---|---|---|---|---|---|---|---|---|---|---|---|
| * = Anzahl Haftvermittlerzusammensetzungsaufträge | | | | | | | | | | | | | |
| ** = die Ablüftezeit von 10 Minuten bezieht sich auf die Applikation der Haftvermittlerzusammensetzung auf die eingebrannte Beschichtung. | | | | | | | | | | | | | |

Wenn eine thermisch gehärtete Silikonbeschichtung ohne den Zusatz einer Haftvermittlerzusammensetzung, das heisst eine dem Standes der Technik entsprechende Hard-Coat-Silikonbeschichtung, hergestellt wurde und die Haftvermittlerzusammensetzung wie in Beispiel ***R8*** und ***R11*** erst nach dem Einbrennen und dem Abkühlen mittels eines mit Haftvermittlerzusammensetzung getränkten fuselfreien Tuch aufgetragen wurde, wurde im Gegensatz zu den erfindungsgemässen Silikonbeschichtungen ***B9*** und ***B22*** keinerlei Haftverbesserung gefunden und die Haftung war vergleichbar schlecht wie die auf den Referenzbeschichtungen ***R1, R2, R3, R4, R5* und *R6.***
Ebenso wenig verbesserte in ***R7*** ein Haftvermittlerzusammensetzungsauftrag, der ohne ein Teilablüften der Silikonzusammensetzung erfolgte, d.h. nass-in-nass (Tₓ = 0), die Haftung des Klebstoffs.

**Tabelle 7. Klebstoffhaftung von auf mit thermisch gehärteten Silikonbeschichtungen überzogenen Polycarbonat (AS4700 als Silikonzusammensetzung).**

| AS4700 | | | | | SF221 | | | STP | | | STUF | | |
|---|---|---|---|---|---|---|---|---|---|---|---|---|---|
| Beschichtung | Haftvermittler | Tₓ [min] | #* | T_{y} [min] | KL | WL | CP | RT | KL | CP | KL | WL | CP |
| ***R4*** | - | - | - | - | 5 | 5 | 5 | 5 | 5 | 5 | 5 | 5 | 5 |
| ***R5*** | ***Ref.1*** | 10 | 1 | 10 | 5 | 5 | 5 | 5 | 5 | 5 | 5 | 5 | 5 |
| ***R6*** | ***Ref.2*** | 10 | 1 | 10 | 5 | 5 | 5 | 5 | 5 | 5 | 5 | 5 | 5 |
| ***B22*** | ***HV5*** | 10 | 1 | 10 | 4 | 4 | 1 | 4 | 4 | 3 | 4 | 4 | 2 |
| ***R9*** | ***HV5** -* | | 1 | 20 | 5 | 5 | 5 | 5 | 5 | 5 | 5 | 5 | 5 |
| ***R10*** | ***HV5** -* | | 1 | 10** | 5 | 5 | 5 | 5 | 5 | 5 | 5 | 5 | 5 |

| | | | | | | | | | | | | | |
|---|---|---|---|---|---|---|---|---|---|---|---|---|---|
| *= Anzahl Haftvermittlerzusammensetzungsaufträge | | | | | | | | | | | | | |
| ** = die Ablüftezeit von 10 Minuten bezieht sich auf die Applikation der Haftvermittlerzusammensetzung auf die eingebrannte Beschichtung. | | | | | | | | | | | | | |

**Tabelle 8. Zugabe von Haftvermittlersubstanzen zu Silikonzusammensetzungen**

| Versuch | Silikonzusammensetzung | Haftvermittlersubstanz | Beobachtung |
|---|---|---|---|
| ***R11*** | PHC587 100g | (BuO)4Ti 1 g | Ausfällung |
| ***R12*** | PHC587 100g | (BuO)4Ti / A1170 0.5g/0.5g | Ausfällung |
| ***R13*** | PHC587 1 00 g | A1170 1 g | stabil |
| ***R14*** | AS4700 100 g | (BuO)4Ti 1 g | Ausfällung |
| ***R15*** | AS4700 100g | (BuO)4Ti/A1170 0.5g/0.5g | Ausfällung |
| ***R16*** | AS4700 1 00 g | A1170 1 g | stabil |

Bei den Beispielen ***R11*** bis ***R16*** in Tabelle 8 wurden die Haftvermittlersubstanzen zur jeweiligen Silikonzusammensetzung in einer Dosierung von 1 g Haftvermittlersubstanz (=Organo-Siliziumverbindung + Organo-Titanverbindung) auf 100 g Silikonzusammensetzung zugegeben. Es erwies sich hierbei jedoch, dass sich bei allen Versuchen, die Organo-Titanverbindungen enthalten, d.h. ***R11, R12, R14*** und ***R15,*** sofort nach der Zugabe Ausfällungen zeigten. Aufgrund dieser Heterogenität können solche Zusammensetzungen nicht als Beschichtungsmaterial verwendet werden. Die Zusammensetzungen ***R13*** und ***R16*** blieben jedoch homogen. Es zeigte sich hier jedoch, dass die nicht erfindungsgemässen thermisch gehärteten Silikonbeschichtungen, bei welchen diese Mischungen aus Haftvermittlersubstanz/Silikonzusammensetzung wie beschrieben auf den thermoplastischen Kunststoff (***R13***), beziehungsweise auf den zuvor geprimerten thermoplastischen Kunststoff (***R16***), appliziert und wie beschrieben nach 20 minütigem Ablüften eingebrannt und erkalten gelassen wurden, keinerlei Haftverbesserung erzielten (Tabelle 9).

**Tabelle 9. Haftung auf thermisch gehärteten Silikonbeschichtungen, welche auf einer Mischung Haftvermittlersubstanz/Silikonzusammensetzung basieren.**

| | SF221 | | | STP | | | STUF | | |
|---|---|---|---|---|---|---|---|---|---|
| | KL | WL | CP | RT | KL | CP | KL | WL | CP |
| ***R13*** | 5 | 5 | 5 | 5 | 5 | 5 | 5 | 5 | 5 |
| ***R16*** | 5 | 5 | 5 | 5 | 5 | 5 | 5 | 5 | 5 |

### Verklebungen von Silikonbeschichtungen

Auf die in Tabelle 10 angegebenen Silikonbeschichtungen wurden ohne vorgängigen Klebstoffprimer eine Raupe Sikaflex®-221 appliziert. Anschliessend wurde eine ebenfalls ungeprimerte beziehungsweise geprimerte Platte des jeweiligen in Tabelle 10 angegebenen Materials des Fügepartners auf die Klebstoffraupe gepresst, so dass eine Klebstoffschichtdicke von 3 mm resultierte. Dieser Verbund wurde während 7 Tagen bei 23°C, 50% rel. Luftfeuchtigkeit gelagert. Keiner der Verbundkörper konnte mittels durch einen Hammers eingetriebenen Keils adhäsiv getrennt werden.

**Tabelle 10. Verklebungen von Hard-Coat-Polycarbonaten und diversen Fügepartnern mittels Sikaflex®-221.**

| Beschictung | Fügepartner | | | | |
|---|---|---|---|---|---|
| ***B5*** | Float-Glas*^{∧} | Stahlblech mit Autolack^{×} | AlMgSi1*^{†} | Edelstahl 1.4301*^{†} | ***B5***^{**‡**} |
| ***B8*** | Float-Glas*^{∧} | Stahlblech mit Autolack^{×} | AlMgSi1*^{†} | Edelstahl 1.4301*^{†} | ***B8***^{**‡**} |
| ***B21*** | Float-Glas*^{∧} | Stahlblech mit Autolack^{×} | AlMgSi1*^{†} | Edelstahl 1.4301*^{†} | ***B21***^{**‡**} |
| ***B23*** | Float-Glas*^{∧} | Stahlblech mit Autolack^{×} | AlMgSi1*^{†} | Edelstahl 1.4301*^{†} | ***B23***^{**‡**} |
| ***B24*** | Float-Glas*^{∧} | Stahlblech mit Autolack^{×} | AlMgSi1*^{†} | Edelstahl 1.4301*^{†} | ***B24***^{**‡**} |
| ***B26*** | Float-Glas*^{∧} | Stahlblech mit Autolack^{×} | AlMgSi1*^{†} | Edelstahl 1.4301*^{†} | ***B26***^{**‡**} |

| | | | | | |
|---|---|---|---|---|---|
| * Bezogen von Firma Rocholl, Deutschland | | | | | |
| ^{∧}Vorbehandlung: Sika® Aktivator (erhältlich von Sika Schweiz AG) | | | | | |
| ^{×} Vorbehandlung: Sika® Primer-206 G+P (erhältlich von Sika Schweiz AG) | | | | | |
| ^{†}Vorbehandlung: angeschliffen und mit Isopropanol getränktem Tuch sauber gewischt und mit Sika® Primer-204 N (erhältlich von Sika Schweiz AG). | | | | | |
| ^{‡}ungeprimert | | | | | |

## Patentansprüche

1. Verfahren zur Herstellung einer thermisch gehärteten Silikonbeschichtung auf einem thermoplastischen Kunststoff, **dadurch gekennzeichnet, dass** es die folgenden Schritte umfasst
- Aufbringen einer Silikonzusammensetzung auf die Oberfläche eines thermoplastischen Kunststoffes oder auf die Oberfläche eines mit einem Kunststoffprimer behandelten thermoplastischen Kunststoffes
- zumindest ein Teil-Ablüften der Silikonzusammensetzung unter Bildung eines Silikonfilms
- Auftragen einer Haftvermittlerzusammensetzung auf den Silikonfilm
- Einbrennen bei einer Temperatur zwischen 80°C und 200°C.

2. Verfahren gemäss Anspruch 1, **dadurch gekennzeichnet, dass** die Silikonzusammensetzung eine wässrige Dispersion einer kolloidalen Kieselsäure in einem Gemisch von Wasser und einem organischen Lösungsmittel und mindestens einem Trialkoxysilan RSi(OR')₃ oder dessen Silanol RSi(OR')₃₋ₙ(OH)ₙ oder Teilkondensate davon umfasst und wobei
R einen Alkyl-Substituenten mit 1-3 Kohlenstoffatomen oder einen Arylsubstituenten mit 6 bis 13 Kohlenstoffatomen darstellt;
R' einen Alkylsubstituenten mit 1-3 Kohlenstoffatomen darstellt und
n=1,2 oder 3 ist.

3. Verfahren gemäss Anspruch 2, **dadurch gekennzeichnet, dass** R = Methyl und R' = Methyl ist.

4. Verfahren gemäss Anspruch 1 bis 3, **dadurch gekennzeichnet, dass** die Silikonzusammensetzung einen Festkörpergehalt von 10 bis 30 Gew.-% insbesondere von 15 bis 25 Gew.-% aufweist.

5. Verfahren gemäss einem der vorhergehenden Ansprüche, **dadurch gekennzeichnet, dass** die Haftvermittlerzusammensetzung mindestens eine Organo-Siliziumverbindung, welche mindestens eine an ein Siliziumatom gebundene Alkoxygruppe sowie mindestens einen über eine Kohlenstoff-Silizium-Bindung an ein Siliziumatom gebundenen organischen Substituenten aufweist, umfasst.

6. Verfahren gemäss einem der Ansprüche 1 bis 4, **dadurch gekennzeichnet, dass** die Haftvermittlerzusammensetzung mindestens eine Organo-Titanverbindung, welche mindestens einen über eine Sauerstoff-Titan-Bindung an das Titanatom gebundenen Substituenten aufweist, umfasst.

7. Verfahren gemäss einem der Ansprüche 1 bis 4, **dadurch gekennzeichnet, dass** die Haftvermittlerzusammensetzung
mindestens eine Organo-Siliziumverbindung, welche mindestens eine an ein Siliziumatom gebundene Alkoxygruppe sowie mindestens einen über eine Kohlenstoff-Silizium-Bindung an ein Siliziumatom gebundenen organischen Substituenten aufweist,
sowie
mindestens eine Organo-Titanverbindung, welche mindestens einen über eine Sauerstoff-Titan-Bindung an das Titanatom gebundenen Substituenten aufweist, umfasst.

8. Verfahren gemäss Anspruch 6, **dadurch gekennzeichnet, dass** der mindestens eine über Sauerstoff-Titan-Bindung an das Titanatom gebundene Substituent ausgewählt ist aus der Gruppe umfassend Alkoxygruppe, Sulfonatgruppe, Carboxylatgruppe, Dialkylphosphatgruppe, Dialkylpyrophosphatgruppe und Acetylacetonatgruppe.

9. Verfahren gemäss Anspruch 7, **dadurch gekennzeichnet, dass** der mindestens eine über Sauerstoff-Titan-Bindung an das Titanatom gebundene Substituent ausgewählt ist aus der Gruppe umfassend Alkoxygruppe, Sulfonatgruppe, Carboxylatgruppe, Dialkylphosphatgruppe, Dialkylpyrophosphatgruppe und Acetylacetonatgruppe.

10. Verfahren gemäss Anspruch 5 oder 7 oder 9, **dadurch gekennzeichnet, dass** die Organo-Siliziumverbindung die Formel (I) oder (II) oder (III) aufweist 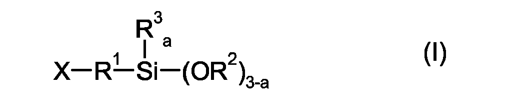 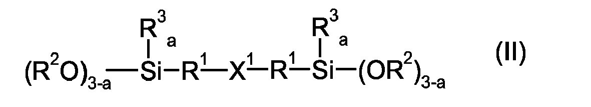 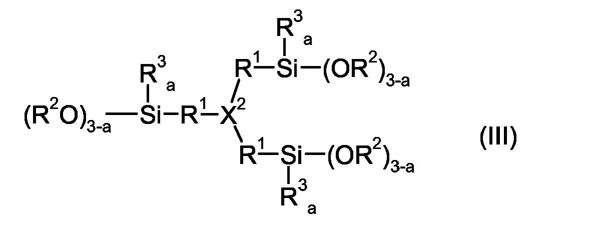
wobei
R¹ eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen darstellt; und
R² für eine Alkylgruppe mit 1 bis 5 C-Atomen, insbesondere für Methyl oder Ethyl, steht; und
R³ für eine Alkylgruppe mit 1 bis 8 C-Atomen, insbesondere Methyl, steht; und
X für ein H, oder eine funktionelle Gruppe, welche ausgewählt ist aus der Gruppe umfassend Oxiran, OH, (Meth)acryloxy, Amin, SH, Acylthio und Vinyl, bevorzugt Amin, steht; und
X¹ für eine funktionelle Gruppe, welche ausgewählt ist aus der Gruppe umfassend NH, S, S₂ und S₄ steht; und
X² für eine funktionelle Gruppe, welche ausgewählt ist aus der Gruppe umfassend N und Isocyanurat steht; und
a für einen der Werte 0, 1 oder 2, bevorzugt 0, steht.

11. Verfahren gemäss Anspruch 10, **dadurch gekennzeichnet, dass** der Substituent R¹ eine Methylen-, Propylen-, Methylpropylen-, Butylen- oder Dimethylbutylengruppe, bevorzugt eine Propylengruppe, ist.

12. Verfahren gemäss Anspruch 11, **dadurch gekennzeichnet, dass** X = NH₂ oder NH₂-CH₂-CH₂-NH und X¹ = NH und X² = N ist.

13. Verfahren nach einem der Ansprüche 5 bis 12 , **dadurch gekennzeichnet, dass** die Haftvermittlerzusammensetzung mindestens ein Lösungsmittel mit einem Siedepunkt bei 760 Torr von zwischen 25°C und 140°C, insbesondere von zwischen 50°C und 120°C, bevorzugt von zwischen 65 und 99°C, umfasst.

14. Verfahren nach Anspruch 13, **dadurch gekennzeichnet, dass** die Haftvermittlerzusammensetzung eine Mischung mindestens eines Kohlenwasserstoffes und mindestens eines polaren Lösungsmittel, welches mindestens ein Heteroatom in seiner Strukturformel aufweist, umfasst.

15. Verfahren nach Anspruch 13 oder 14, **dadurch gekennzeichnet, dass** das mindestens ein Lösungsmittel ein Alkohol oder ein aliphatischer Kohlenwasserstoff oder ein cycloaliphatischer Kohlenwasserstoff, insbesondere Ethanol, Isopropanol, Hexan, Cyclohexan, Heptan oder Octan, bevorzugt Ethanol oder Heptan, ist.

16. Verfahren nach einem der Ansprüche 5 bis 15, **dadurch gekennzeichnet, dass** die Haftvermittlerzusammensetzung einen Gehalt an Organo-Siliziumverbindung und / oder Organo-Titanverbindung von 1 bis 20 Gew.-%, insbesondere zwischen 2 bis 10 Gew.-%, aufweist.

17. Verfahren gemäss einem der vorhergehenden Ansprüche, **dadurch gekennzeichnet, dass** die Haftvermittlerzusammensetzung in einer Menge zwischen 10 und 200 g/m², insbesondere zwischen 30 und 100 g/m², auf den Silikonfilm aufgetragen wird.

18. Verfahren gemäss einem der nach einem der Ansprüche 5 bis 17, **dadurch gekennzeichnet, dass** 0.02 bis 40 g/m², insbesondere 0.1 bis 20 g/m², bevorzugt 0.5 bis 10 g/m², an Organo-Siliziumverbindung und / oder Organo-Titanverbindung auf den Silikonfilm aufgetragen wird.

19. Verfahren gemäss einem der vorhergehenden Ansprüche, **dadurch gekennzeichnet, dass** der thermoplastische Kunststoff ein Polycarbonat, insbesondere ein aromatisches Polycarbonat, ist.

20. Verfahren gemäss einem der einem der vorhergehenden Ansprüche, **dadurch gekennzeichnet, dass** das Teil-Ablüften der Silikonzusammensetzung zwischen 5 Minuten und 60 Minuten, insbesondere zwischen 5 und 30 Minuten, bevorzugt zwischen 5 bis 25 Minuten, dauert.

21. Verfahren gemäss einem der einem der vorhergehenden Ansprüche, **dadurch gekennzeichnet, dass** das Einbrennen bei einer Temperatur zwischen 100 und 140°C, insbesondere während einer Einbrennzeit von 30 bis 90 Minuten, erfolgt.

22. Thermisch gehärtete Silikonbeschichtung, **dadurch gekennzeichnet, dass** sie nach einem Verfahren gemäss einem der Ansprüche 1 bis 21 hergestellt werden.

23. Verfahren zum Verkleben von thermisch gehärteten Silikonbeschichtungen gemäss Anspruch 22, **dadurch gekennzeichnet, dass** ein Klebstoff mit der thermisch gehärteten Silikonbeschichtung in Kontakt gebracht wird ohne dass vorgängig auf der thermisch gehärteten Silikonbeschichtung ein Klebstoffprimer aufgebracht worden ist.

24. Verfahren zum Verkleben gemäss Anspruch 23, **dadurch gekennzeichnet, dass** die thermisch gehärtete Silikonbeschichtung mittels eines Klebstoffes mit einem weiteren Fügepartner verklebt wird.

25. Verfahren zum Verkleben gemäss Anspruch 24, **dadurch gekennzeichnet, dass** der weitere Fügepartner ein Kunststoff ist.

26. Verfahren zum Verkleben gemäss Anspruch 24, **dadurch gekennzeichnet, dass** der weitere Fügepartner ein Metall, insbesondere ein lackiertes Metall, ist.

27. Verfahren zum Verkleben gemäss Anspruch 24, **dadurch gekennzeichnet, dass** der weitere Fügepartner Glas oder Glaskeramik, insbesondere eine Scheibe, ist.

28. Verfahren zum Verkleben gemäss einem der Ansprüche 24 bis 27, **dadurch gekennzeichnet, dass** der weitere Fügepartner vor dem Verkleben mit einem Primer vorbehandelt wird.

29. Verfahren zum Verkleben gemäss einem der Ansprüche 23 bis 28, **dadurch gekennzeichnet, dass** der Klebstoff ein einkomponentiger feuchtigkeitshärtender Polyurethanklebstoff, enthaltend Isocyanatterminierte Polyurethanprepolymere, ist.

30. Verbundkörper, welcher durch ein Verfahren zum Verkleben gemäss einem der Ansprüche 23 bis 29 hergestellt wird und wobei der Klebstoff ausgehärtet ist.

31. Verbundkörper gemäss Anspruch 30, **dadurch gekennzeichnet, dass** der Verbundkörper ein Fahrzeuge, insbesondere ein Automobil, oder ein Teil davon ist.

32. Verbundkörper gemäss Anspruch 30, **dadurch gekennzeichnet, dass** der Verbundkörper ein Display zur Darstellung von Informationen ist.

33. Verwendung einer Haftvermittlerzusammensetzung, wie sie in den Ansprüchen 5 bis 16 beschrieben ist, zur Verbesserung der Haftung von Klebstoffen von Silikonbeschichtungen.
